# FASCICULE DE BREVET EUROPEEN

(11) **EP 0 410 891 B1**
(45) Date de publication et mention de la délivrance du brevet: **07.07.1993**
(21) Numéro de dépôt: 90402155.7
(22) Date de dépôt: 26.07.1990
(51) Int. Cl.: B60T 7/12, B60T 8/48, B60T 13/14

(54) **Circuit hydraulique de freinage**
Hydraulischer Bremskreis
Hydraulic brake circuit

(30) Priorité: 27.07.1989 FR 8910131
(43) Date de publication de la demande: 30.01.1991
(73) Titulaire: ALLIEDSIGNAL EUROPE SERVICES TECHNIQUES, 93700 Drancy (FR)
(72) Inventeur: Kervagoret, Gilbert, Bendix Europe Service Techn., F-93700 Drancy (FR)

(56) Documents cités:
- EP-A- 0 230 213
- EP-A- 0 320 943
- EP-A- 0 329 333
- EP-A- 0 353 125
- DE-A- 2 419 010
- DE-A- 3 821 225
- FR-A- 2 440 854
- FR-A- 2 538 329
- GB-A- 2 051 985
- GB-A- 2 207 721

## Description

La présente invention concerne un circuit hydraulique de freinage notamment pour véhicule automobile, et plus particulièrement, un tel circuit permettant d'obtenir un freinage automatique contrôlé par une unité de commande électronique.

Les systèmes de freinage automatique présentent de nombreux avantages pour la sécurité. Par exemple, ils permettent de ralentir et même d'arrêter un véhicule lorsqu'un obstacle a été détecté par exemple par un radar de bord, alors même que le conducteur du véhicule n'a pas vu cet obstacle.

De plus, combinés avec une logique appropriée, ils permettent d'assurer une fonction anti-patinage à l'accélération, et/ou d'antiblocage.

Pour ne pas présenter d'effets pervers, un tel système doit fonctionner exactement comme le ferait un conducteur, c'est-à-dire avec la progressivité et la douceur requises. En outre, son coût ne doit pas être prohibitif.

Un circuit connu de ce type, comprenant toutes les caractéristiques énoncées dans le préambule de la revendication principale, est par exemple illustré par le document FR-A-2 538 329.

Le circuit décrit dans ce document est un circuit double, doté de moyens essentiellement destinés à réduire les risques en cas de défaillance.

Ainsi, bien que ce circuit connu comporte une valve de freinage qui joue le rôle d'un distributeur relativement complexe, il ne peut, tel que décrit, assurer une fonction d'anti-patinage à l'accélération.

On connaît de la même façon, par le document DE-A-3 821 225, un circuit hydraulique dans lequel un générateur de pression, commandé par le maître-cylindre, peut subvenir à certaines défaillances, ce circuit ne permettant cependant pas non plus d'assurer une fonction d'anti-patinage à l'accélération.

Enfin, on connaît, par le document EP-A-0 230 213, un circuit hydraulique pour un système automatique de freinage, dans lequel un circuit électronique déclenche, sur un signal provenant d'un capteur, des électrovannes permettant au fluide sous pression contenu dans un accumulateur de parvenir aux freins de roues. Ce circuit présente de nombreux inconvénients en ce sens que les freins sont alimentés par les électrovannes en tout ou rien, aucun asservissement en pression n'est prévu et de plus, l'accumulateur est mis sous pression par le maître-cylindre, ce qui peut s'avérer très dangereux.

La présente invention a donc pour objet un circuit hydraulique de freinage pour un tel système, et qui ne présente pas les inconvénients mentionnés ci-dessus.

L'invention concerne donc un circuit hydraulique de freinage comprenant au moins une source de liquide de freinage, un maître-cylindre dont les sorties sont reliées à au moins un sous-circuit comprenant au moins un moteur de frein, et qui est commandé au moyen d'une pédale, et une unité de commande électronique.

Selon la présente invention, ce circuit comprend en outre un générateur de pression, et une électrovalve disposée dans chaque sous-circuit, de manière à établir une communication, au repos, entre les sorties du maître-cylindre et les moteurs de frein associés et, en position excitée, entre les sorties du générateur et les moteurs de frein associés, l'unité de commande étant apte à commander simultanément le fonctionnement au générateur de pression et l'excitation de l'électrovalve.

De préférence la source de liquide est une source de liquide sous haute pression et le générateur de pression est un distributeur dont les entrées sont reliées à la source.

De préférence encore, le distributeur comporte une chambre de commande reliée d'une part à la source de liquide sous pression et d'autre part au réservoir respectivement par l'intermédiaire d'au moins une électrovalve également commandée par l'unité de commande.

De façon avantageuse, un capteur de pression est hydrauliquement relié à la chambre de commande et délivre à l'unité de commande un signal fonction de la pression du liquide dans cette chambre de manière à commander cette pression.

De préférence, la chambre de commande communique avec la chambre d'un accumulateur de pression.

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessin est jointe sur laquelle :

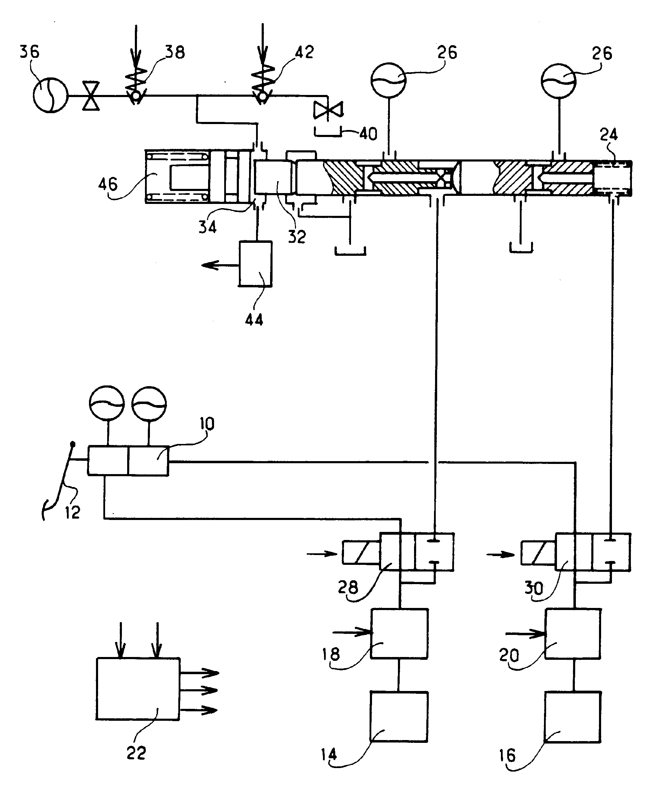

La Figure unique représente, schématiquement, un circuit hydraulique conforme à l'invention.

En référence maintenant à cette Figure, l'homme du métier reconnaîtra tout d'abord un circuit de freinage conventionnel comprenant un maître-cylindre tandem 10 commandé au moyen d'une pédale 12 et deux sous-circuits connectés aux sorties du maître-cylindre 10 pour alimenter deux jeux de moteurs de frein, 14 et 16 respectivement, par l'intermédiaire d'un dispositif d'anti-blocage des roues 18, 20 commandé par une unité de commande électronique 22 recevant notamment des informations au moyen de divers capteurs non représentés sur la Figure.

Sur l'exemple illustré, le maître-cylindre est un servomoteur hydraulique alimenté par du liquide sous pression. Bien évidemment, le circuit fonctionnerait identiquement avec un servomoteur pneumatique et un simple réservoir de liquide sous basse pression.

Pour l'obtention de la fonction de freinage automatique, un distributeur 24 a été ajouté au circuit en parallèle avec le maître-cylindre 10. Ce distributeur 24 est en pratique un doseur double comportant deux clapets, par exemple des tiroirs, susceptibles d'être ouverts par coulissement axial pour assurer une communication entre des réservoirs de liquide sous pression et les sorties correspondantes. Ces dernières sont reliées aux sous-circuits du maître-cylindre 10 par l'intermédiaire d'une électrovalve à deux positions, 28 et 30 respectivement, telle qu'au repos les sorties du maître-cylindre 10 soient en communication avec les jeux de moteurs de frein 14, 16.

Le coulissement axial des tiroirs du doseur 24 est obtenu au moyen d'un piston 32 coulissant dans une chambre 34 susceptible d'être alimenté en liquide sous pression à partir d'une source 36, une électrovalve 38 assurant la commande de l'admission du liquide dans la chambre 34 qui est également reliée à un réservoir de fluide sous basse pression 40 par l'intermédiaire d'une électrovalve 42 commandant la détente du liquide dans la chambre 34.

De façon avantageuse, un capteur de pression 44 est hydrauliquement relié à cette chambre 34 pour envoyer à l'unité de commande 22 un signal correspondant à cette pression régnant dans la chambre 34. Un tel capteur 44 permet donc de moduler judicieusement la progressivité et la douceur d'un freinage automatique.

Le circuit fonctionne comme suit.

En cas de freinage normal, les électrovalves 28 et 30 sont dans la position de repos représentée et l'actionnement de la pédale 12 a pour effet d'alimenter les moteurs de frein 14 et 16, alimentation pouvant être éventuellement modulée par les dispositifs d'anti-blocage 18, 20.

En freinage automatique, dès que l'unité de commande 22 a reçu l'ordre d'alimenter les moteurs de frein 14, 16, les électrovalves 28 et 30 sont excitées de manière à mettre en communication ces moteurs et les sorties du distributeur 24, l'unité de commande 22 commande également l'ouverture de l'électrovalve d'admission 38, de manière à augmenter la pression dans la chambre 34, ce qui a pour effet de déplacer le piston 32 et d'ouvrir les tiroirs du distributeur 24. Les réservoirs 26 sont alors en communication avec les moteurs de frein 14, 16.

Pour contrôler la décélération souhaitée, l'unité de commande 22, recevant les informations de vitesse des roues au moyen de capteurs appropriés et de pression du liquide dans la chambre 34 au moyen du capteur 44, ouvre et/ou ferme les électrovalves d'admission 38 et de détente 42 pour obtenir l'effet voulu.

Lorsque cet effet est atteint, l'électrovalve de détente 42 est ouverte et les deux électrovalves 28, 30 retournent au repos, isolant ainsi le distributeur 24 des moteurs de frein 14, 16 et connectant ces derniers au maître-cylindre conventionnel 10.

Pour éviter, en freinage automatique, un freinage initial trop brutal, la chambre de commande 34 est reliée à la chambre d'un accumulateur de liquide sous pression 46 comprenant un simple piston coulissant à l'encontre d'un ressort de compression.

De préférence également, lors d'un freinage automatique, l'unité de commande électronique 22 agit sur le moteur thermique et/ou sur l'embrayage comme le ferait tout conducteur du véhicule.

Le circuit qui vient d'être décrit permet, bien évidemment, de freiner un véhicule automatiquement en réponse à un danger, par exemple détecté par un radar de bord ou annoncé par une balise radio judicieusement disposée sur le bord de la route, ou par tout autre moyen équivalent.

Il permet également d'assurer la fonction anti-patinage des roues à l'accélération notamment sur route verglacée.

En effet, lorsque les capteurs non représentés de vitesse des roues détectent un patinage, l'unité de commande 22 peut choisir de freiner les roues automatiquement pour éviter ce patinage, le dispositif d'anti-blocage 18, 20 évitant alors aux roues de passer d'un état de patinage à un état de blocage.

De même, en l'absence des dispositifs d'antiblocage 18 et 20, le distributeur 24 peut assurer la fonction d'antiblocage du fait de la possibilité d'obtention d'une détente rapide de la pression dans les moteurs de frein 14, 16 grâce à l'électrovalve de détente 42.

Bien que seul un mode préféré de réalisation de l'invention ait été décrit, il est évident que de nombreuses modifications pourront être apportées par l'homme du métier sans sortir du cadre de la présente invention tel que défini par les revendications jointes. Notamment le circuit peut fonctionner avec tout autre type de générateur de pression.

On pourra également prévoir d'adjoindre au générateur de pression un détecteur de défaillance permettant d'interdire à l'unité de commande électronique 22 d'exciter les électrovalves 28 et 30 et de prévenir le conducteur de la défaillance du système de freinage automatique.

De même, en disposant entre les sorties du maître-cylindre 10 un indicateur de défaillance du maître-cylindre, relié à l'unité de commande, il est possible à cette dernière de détecter la volonté du conducteur de freiner le véhicule lorsqu'il appuie sur la pédale 12 et, en fonction de la force exercée par le conducteur sur cette pédale, de faire fonctionner le générateur 24 en lieu et place du maître-cylindre pour assurer la sécurité du système.

## Revendications

1. Circuit hydraulique de freinage, comprenant :
- au moins un sous-circuit comprenant au moins un moteur de frein (14, 16) et une électrovalve (28, 30) pour chaque sous-circuit,
- un maître-cylindre (10) commandé au moyen d'une pédale (12) et comportant des sorties reliées à des moteurs de freins respectifs (14, 16) à travers des électrovalves respectives (28, 30),
- un générateur de pression (24) comportant des sorties respectivement reliées auxdits moteurs de freins à travers lesdites électrovalves, et
- une unité de commande électronique (22) propre à commander ledit générateur et lesdites électrovalves de manière à permettre un actionnement desdits moteurs de frein par le maître-cylindre ou par le générateur de pression,
caractérisé en ce que le générateur de pression comprend un distributeur (24) et au moins une source de pression (26, 36) raccordée à des entrées de ce distributeur, ce distributeur comprenant une chambre de commande (34) et étant commandé par raccordement de cette chambre à ladite source ou à un réservoir sous basse pression (40) par l'intermédiaire d'au moins une électrovalve (38, 42) commandée par ladite unité de commande (22).

2. Circuit selon la revendication 1 caractérisé en ce qu'un capteur de pression (44) est hydrauliquement relié à ladite chambre de commande (34) et délivre à ladite unité de commande (22) un signal fonction de la pression du liquide dans ladite chambre (34) de manière à commander la pression dans cette dernière.

3. Circuit selon la revendication 1 ou 2 caractérisé en ce que ladite chambre de commande (34) communique avec la chambre d'un accumulateur de pression (46).

## Claims

1. Hydraulic braking circuit, comprising:
- at least one sub-circuit comprising at least one brake motor (14, 16) and an electrovalve (28, 30) for each sub-circuit,
- a master cylinder (10) controlled by means of a pedal (12) and including outlets connected to respective brake motors (14, 16) through respective electrovalves (28, 30),
- a pressure generator (24) including outlets connected respectively to the said brake motors through the said electrovalves, and
- an electronic control unit (22) able to control the said generator and the said electrovalves in such a way as to allow actuation of the said brake motors by the master cylinder or by the pressure generator,
characterized in that the pressure generator comprises a distributor (24) and at least one pressure source (26, 36) coupled to the inlets of this distributor, this distributor comprising a control chamber (34) and being controlled by coupling this chamber to the said source or to a reservoir under low pressure (40) by way of at least one electrovalve (38, 42) controlled by the said control unit (22).

2. Circuit according to Claim 1, characterized in that a pressure sensor (44) is hydraulically connected to the said control chamber (34) and delivers to the said control unit (22) a signal which is a function of the pressure of the fluid in the said chamber (34) so as to control the pressure in the latter.

3. Circuit according to Claim 1 or 2, characterized in that the said control chamber (34) is connected with the chamber of a pressure accumulator (46).

## Patentansprüche

1. Hydraulikbremskreis, mit:
- wenigstens einem Unterkreis, der wenigstens einen Bremszylinder (14, 16) und ein Elektroventil (28, 30) pro Unterkreis aufweist,
- einem Hauptzylinder (10), der mittels eines Pedals (12) gesteuert wird und Ausgänge besitzt, die über entsprechende Elektroventile (28, 30) mit den entsprechenden Bremszylindern (14, 16) verbunden sind,
- einem Druckgenerator (24), der Ausgänge enthält, die über die genannten Elektroventile mit den jeweiligen Bremszylindern verbunden sind, und
- einer elektronischen Steuereinheit (22), die dazu geeignet ist, den Generator und die Elektroventile so zu steuern, daß eine Betätigung der Bremszylinder durch den Hauptzylinder oder durch den Druckgenerator möglich ist,
dadurch gekennzeichnet, daß der Druckgenerator einen Verteiler (24) und wenigstens eine mit den Eingängen dieses Verteilers verbundene Druckquelle (26, 36) aufweist, wobei dieser Verteiler eine Steuerkammer (34) aufweist und durch die Verbindung dieser Kammer mit der Quelle oder mit einem Niederdruckbehälter (40) über wenigstens ein von der Steuereinheit (22) gesteuertes Elektroventil (38, 42) gesteuert wird.

2. Kreis gemäß Anspruch 1, dadurch gekennzeichnet, daß ein Druckmeßfühler (44) mit der Steuerkammer (34) hydraulisch verbunden ist und an die Steuereinheit (22) ein Signal liefert, das vom Druck der Flüssigkeit in der Kammer (34) abhängt, derart, daß der Druck in dieser letzteren gesteuert wird.

3. Kreis gemäß Anspruch 1 oder 2, dadurch gekennzeichnet, daß die Steuerkammer (34) mit der Kammer eines Druckakkumulators (46) in Verbindung steht.
